# EUROPEAN PATENT APPLICATION

(11) **EP 4 319 301 A1**
(43) Date of publication of application: **07.02.2024**
(21) Application number: 22780238.6
(22) Date of filing: 18.03.2022
(51) Int. Cl.: H04W 36/06, H04W 56/00

(54) **USER EQUIPMENT AND COMMUNICATION CONTROL METHOD**

(30) Priority: 31.03.2021 JP 2021060879
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: TAKAHASHI, Hideaki, Kariya-city, Aichi 448-8661 (JP)
(74) Representative: TBK
(86) International application number: PCT/JP2022/012600
(87) International publication number: WO 2022/210023

(57) **Abstract**

A user equipment (100) according to an aspect of the present disclosure performs communication with a base station (200) in a BWP that is a subset of a total bandwidth of a cell of the base station (200). The user equipment comprises: a communicator (110) configured to perform the communication using an active BWP to be used for the communication with the base station (200) among a plurality of the BWPs configured in the user equipment (100); and a controller (120) configured to store a downlink frame timing in a BWP with an SSB when the active BWP is the BWP with the SSB, which is the BWP in which the SSB is transmitted from the base station (200). the controller (120) is configured to adjust an uplink transmission timing in the active BWP with reference to the stored downlink frame timing when the active BWP is a BWP without the SSB, which is the BWP in which the SSB is not transmitted from the base station (200).

## Description

### Cross-Reference to Related Applications

This application is based on and claims the benefit of priority of Japanese Patent Application No. 2021-060879, filed on March 31, 2021, the entire contents of which are incorporated herein by reference.

### Technical Field

The present disclosure relates to a user equipment, and a communication control method used in a mobile communication system.

### Background Art

In a fifth generation (5G) mobile communication system (5G system), communication between a user equipment and a base station using a bandwidth part (BWP) that is a subset of a total bandwidth of a cell is defined. The user equipment performs communication by using a BWP (hereinafter, active BWP) used for communication with the base station. In the user equipment, a plurality of the BWPs can be configured for each of a downlink communication BWP (hereinafter, a downlink BWP) and an uplink communication BWP (hereinafter, an uplink BWP). The user equipment switches and uses the active BWP in a case where the plurality of BWPs is configured.

A base station transmits a synchronization signal and a physical broadcast channel block (hereinafter, SSB). User equipment can grasp a downlink frame timing based on the SSB received from the base station. When performing uplink transmission in an uplink frame, the user equipment adjusts an uplink transmission timing using the downlink frame timing as a reference corresponding to the uplink frame. Each of the plurality of pieces of user equipment managed by the base station adjusts the uplink transmission timing, thereby making it possible to enable the base station to receive an uplink transmission signal from the plurality of pieces of user equipment within a predetermined time range.

In recent years, in 3GPP which is a mobile communication system standardization project, it has been studied to provide user equipment (so-called Reduced capability NR device) with limited communication capability in a 5G system. Since such the user equipment does not have multiple receivers, it is not possible to perform measurement on SSB transmitted at frequencies other than a BWP during communication in the BWP. For this reason, it is conceivable to configure a BWP in which the SSB is transmitted to the user equipment with limited communication capability. However, the BWP in which the SSB is transmitted is restricted, concentration of a large number of user equipment in such a restricted active BWP may cause traffic congestion.

Therefore, in order to avoid traffic congestion, it is desirable to be able to configure a BWP in which no SSB is transmitted in the total bandwidth of a cell in the user equipment (for example, refer to Non Patent Literature 1).

### Citation List

### Non Patent Literature

Non Patent Literature 1: 3GPP Contribution "R1-2100230"

### Summary of Invention

However, in a case where the user equipment switches the BWP in which the SSB is not transmitted among the plurality of configured BWPs to an active BWP, since the SSB is not transmitted in the active BWP after the switching, the downlink frame timing of the active BWP after the switching cannot be learned. Therefore, there is a problem in that the user equipment cannot appropriately adjust the uplink transmission timing when the uplink transmission is performed in the active BWP.

Therefore, an object of the present disclosure is to provide user equipment and a communication control method capable of appropriately adjusting the uplink transmission timing in an active BWP even when a BWP in which an SSB is not transmitted is configured.

A user equipment according to an aspect of the present disclosure performs communication with a base station in a BWP that is a subset of a total bandwidth of a cell of the base station. The user equipment comprises: a communicator configured to perform the communication using an active BWP to be used for the communication with the base station among a plurality of the BWPs configured in the user equipment; and a controller configured to store a downlink frame timing in a BWP with an SSB when the active BWP is the BWP with the SSB, which is the BWP in which the SSB is transmitted from the base station. The controller is configured to adjust an uplink transmission timing in the active BWP with reference to the stored downlink frame timing when the active BWP is a BWP without the SSB, which is the BWP in which the SSB is not transmitted from the base station.

A communication control method according to an aspect of the present disclosure is executed by a user equipment configured to perform communication with a base station in a BWP that is a subset of a total bandwidth of a cell of the base station. The communication control method comprises the steps of: performing the communication using an active BWP to be used for the communication with the base station among a plurality of the BWPs configured in the user equipment; storing a downlink frame timing in a BWP with an SSB when the active BWP is the BWP with the SSB, which is the BWP in which the SSB is transmitted from the base station; and adjusting an uplink transmission timing in the active BWP with reference to the stored downlink frame timing when the active BWP is a BWP without the SSB, which is the BWP in which the SSB is not transmitted from the base station.

### Brief Description of Drawings

Fig. 1 is an explanatory diagram illustrating an example of a schematic configuration of a system according to an embodiment of the present disclosure.
Fig. 2 is a block diagram illustrating an example of a schematic functional configuration of user equipment according to an embodiment of the present disclosure.
Fig. 3 is a block diagram illustrating an example of a schematic functional configuration of a base station according to an embodiment of the present disclosure.
Fig. 4 is an explanatory diagram illustrating a relationship between an uplink frame and a downlink frame according to the embodiment of the present disclosure.
Fig. 5 is a flowchart for explaining an example of a schematic flow of processing (example 2) according to Operation Example 1 of an embodiment of the present disclosure.

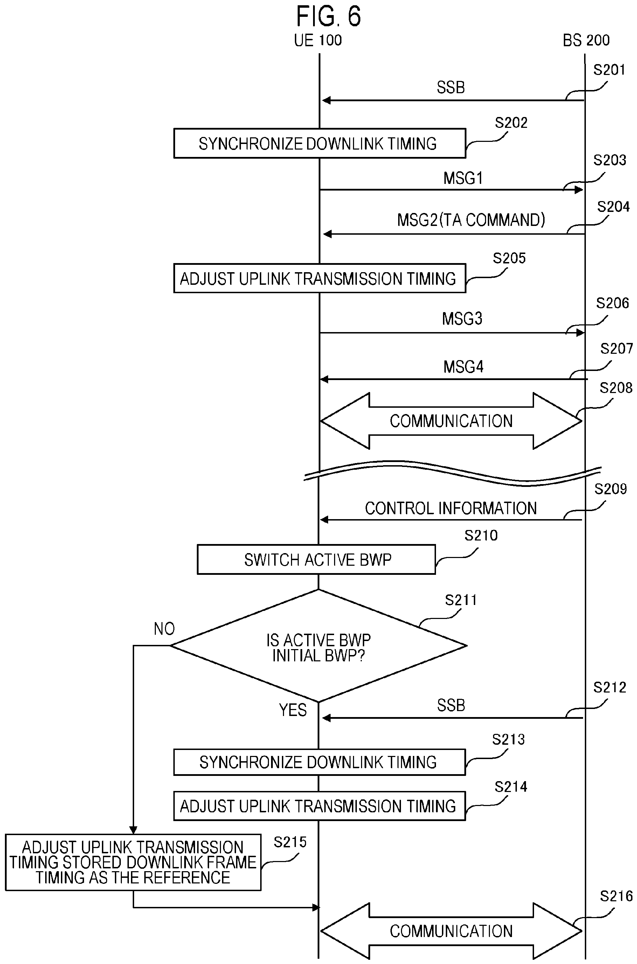

Fig. 6 is a flowchart for explaining an example of a schematic flow of processing according to Operation Example 2 of an embodiment of the present disclosure.

### Description of Embodiments

Hereinafter, embodiments of the present disclosure will be described in detail with reference to the accompanying drawings. Note that, in the present specification and the drawings, elements that can be described in a similar manner are denoted by the same or similar reference numerals, and redundant description can be omitted.

### (1) System Configuration

### (1.1) System Overview

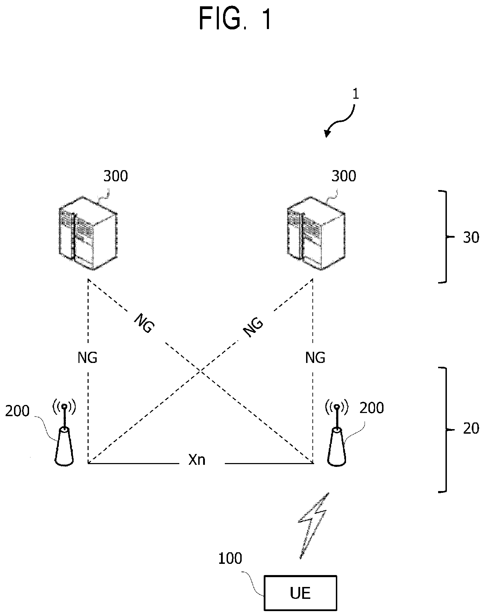

An example of a configuration of a system 1 according to an embodiment of the present disclosure will be described with reference to Fig. 1. The system 1 is, for example, a mobile communication system conforming to technical specifications (Technical specification (TS)) of 3GPP which is a mobile communication system standardization project. Hereinafter, as the system 1, a 5th generation system (5th Generation System (5GS)) of the 3GPP standard, that is, a mobile communication system based on NR (New Radio) will be described as an example. Note that the system 1 is not limited to this example. The system 1 may be a system conforming to a TS of LTE (Long Term Evolution) or another generation system (for example, the sixth generation) of the 3GPP standard. The system 1 may be a system conforming to TS of a standard other than the 3GPP standard.

As illustrated in Fig. 1, a system 1 includes a 5G radio access network (so-called Next Generation Radio Access Network (NG-RAN)) 20, a 5G core network (5G Core Network (5GC)) 30, and user equipment (User Equipment (UE)) 100.

The NG-RAN 20 includes a base station (Base Station (BS)) 200 that is a node of a radio access network. The BS 200 may communicate with a UE 100 located within a coverage area of the BS 200. The BS 200 communicates with the UE 100 using, for example, a protocol stack of the RAN. The protocol stack includes, for example, a RRC (Radio Resource Control) layer, a SDAP (Service Data Adaptation Protocol) layer, a PDCP (Packet Data Convergence Protocol) layer, a RLC (Radio Link Control) layer, a MAC (Medium Access Control) layer, and a physical (Physical (PHY)) layer. However, in the case of LTE, there may be no SDAP layer.

The BS 200 is, for example, a gNB that provides an NR user plane and control plane protocol terminations towards the UE 100 and is connected to the 5GC 30 via an NG interface. Note that the BS 200 may be, for example, an eNB that provides E-UTRA user plane and control plane protocol terminations toward the UE 100 in LTE.

The BS 200 may include a plurality of units. The plurality of units may include a first unit that hosts a higher layer (higher layer) included in the protocol stack and a second unit that hosts a lower layer (lower layer) included in the protocol stack. The higher layer may include an RRC layer, an SDAP layer, and a PDCP layer, and the lower layer may include an RLC layer, a MAC layer, and a PHY layer. The first unit may be a CU (central unit), and the second unit may be a DU (Distributed Unit). The plurality of units may include a third unit that performs processing below the PHY layer. The second unit may perform processing above the PHY layer. The third unit may be a RU (Radio Unit). The BS 200 may be one of the plurality of units and may be connected to another unit of the plurality of units. Furthermore, the BS 200 may be an IAB (Integrated Access and Backhaul) donor or an IAB node.

The 5GC 30 includes a core network apparatus 300. The core network apparatus 300 includes, for example, an AMF (Access and Mobility Management Function) and/or a UPF (User Plane Function). The AMF performs mobility management of the UE 100. The UPF provides a function specialized for U-plane processing. The AMF and the UPF are connected to the BS 200 via an NG interface.

The UE 100 may communicate with the BS 200 when located within the coverage area of the BS 200. The UE 100 may communicate with the BS 200 using the protocol stack described above.

The UE 100 is a communication apparatus that communicates via the base station 200. The UE 100 may be an apparatus used by a user. The UE 100 is, for example, a mobile radio communication apparatus such as a mobile phone terminal such as a smartphone, a tablet terminal, a notebook PC, a communication module, or a communication card. Furthermore, the UE 100 may be a vehicle (for example, a car, a train, or the like) or an apparatus provided in the vehicle. The UE 100 may be a transport body other than a vehicle (for example, a ship, an airplane, or the like) or an apparatus provided in the transport body other than a vehicle. Furthermore, the UE 100 may be a sensor or an apparatus provided in the sensor. Note that the UE 100 may be referred to as another name such as a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit.

The UE 100 may be user equipment (so-called reduced capability NR device (RedCap UE)) with limited communication capability. The RedCap UE may be, for example, a UE with reduced equipment cost and complexity as compared with UEs that meet Rel-15 or Rel-16 high performance, enhanced mobile broadband (enhanced Mobile Broadband (eMBB)) and ultra-reliable low latency (ultra-reliable and low latency communications (URLLC)). The RedCap UE may be capable of communicating at a communication speed higher than or equal to a communication speed defined by a LPWA (Low Power Wide Area) standard (for example, LTE Cat.1/1bis, LTECat.M1 (LTE-M), LTECat. NB1 (NB-IoT)). The RedCap UE may be communicable with a bandwidth greater than or equal to the bandwidth specified in the LPWA standard. The RedCap UE may have a restricted bandwidth used for communication as compared with the UE of Rel-15 or Rel-16. In FR1 (Frequency Range 1), for example, the maximum bandwidth of the RedCap UE may be 20 MHz, and may be 40 MHz under predetermined conditions. In FR2 (Frequency Range 2), for example, the maximum bandwidth of the RedCap UE may be 100 MHz. The RedCap UE may have only one receiver (so-called Rx chain) that receives a radio signal. The RedCap UE may be, for example, an industrial wireless sensor, a video surveillance apparatus, or a wearable apparatus.

### (1.2) Configuration of User Equipment

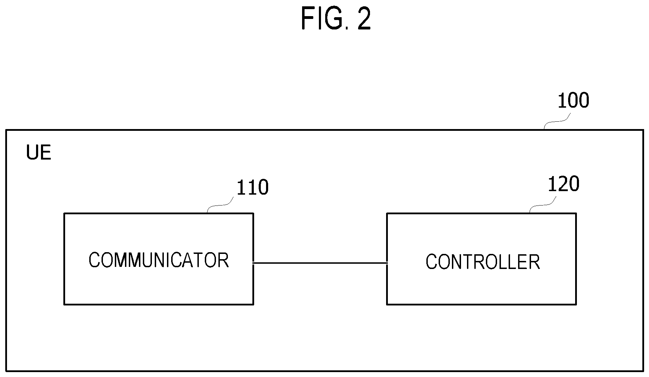

An example of a configuration of the UE 100 according to the embodiment of the present disclosure will be described with reference to Fig. 2. The UE 100 includes a communicator 110 and a controller 120.

The communicator 110 communicates with other communication apparatuses by transmitting and receiving signals. For example, the communicator 110 receives a radio signal from the BS 200 and transmits a radio signal to the BS 200. Furthermore, for example, the communicator 110 may receive a radio signal from another UE and transmit a radio signal to another UE.

The communicator 110 may include one or more receivers that receive radio signals and one or more transmitters that transmit radio signals. Hereinafter, a configuration in which the communicator 110 includes only one receiver is mainly assumed. The receiver and the transmitter may include an antenna and an RF circuit. The antenna converts a signal into a radio wave and emits the radio wave into space. Furthermore, the antenna receives a radio wave in space and converts the radio wave into a signal. The antenna may include a transmitting antenna and a receiving antenna. The antenna may include an antenna for transmission and reception. The antenna may include a plurality of antenna elements. The RF circuit performs analog processing of a signal transmitted and received via the antenna. The RF circuit may include a high frequency filter, an amplifier, a modulator, a low pass filter, and the like.

The controller 120 performs various controls in the UE 100. The controller 120 controls, for example, communication with the BS 200 or another UE 100 via the communicator 110. An operation of the UE 100 to be described later may be an operation under the control of the controller 120.

The controller 120 may include one or more processors capable of executing a program, and a memory that stores the program. The one or more processors may execute the program to perform the operation of the controller 120. The program may be a program for causing the processor to execute the operation of the controller 120.

The processor performs digital processing of signals transmitted and received via the antenna and the RF circuit. The digital processing includes processing of a protocol stack of the RAN. The processor may be a single processor. The processor may include a plurality of processors. The plurality of processors may include a baseband processor that performs digital processing and one or more processors that perform other processing. The memory stores a program executed by the processor, a parameter related to the program, and data related to the program. The memory may include at least one of a ROM (Read Only Memory), an EPROM (Erasable Programmable Read Only Memory), an EEPROM (Electrically Erasable Programmable Read Only Memory), a RAM (Random Access Memory), and a flash memory. All or a part of the memory may be included in the processor.

Note that, in the following, an operation of a functional unit (specifically, the communicator 110 and the controller 120) included in the UE 100 may be described as an operation of the UE 100.

### (1.3) Configuration of Base Station

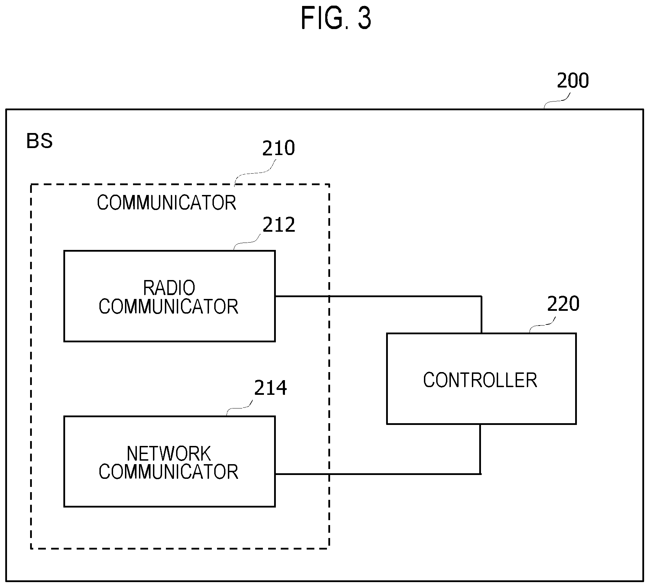

An example of a configuration of the BS 200 according to the embodiment of the present disclosure will be described with reference to Fig. 3. The BS 200 includes a communicator 210 and a controller 220.

The communicator 210 communicates with other communication apparatuses by transmitting and receiving signals. The communicator 210 includes a radio communicator 212 and a network communicator 214.

The radio communicator 212 transmits and receives signals from the radio communication apparatus. For example, the radio communicator 212 receives a radio signal from the UE 100 and transmits a radio signal to the UE 100. The radio communicator 212 may include one or more receivers that receive radio signals and one or more transmitters that transmit radio signals. The receiver and the transmitter may include an antenna and an RF circuit. The antenna converts a signal into a radio wave and emits the radio wave into space. Furthermore, the antenna receives a radio wave in space and converts the radio wave into a signal. The antenna may include a transmitting antenna and a receiving antenna. The antenna may include an antenna for transmission and reception. The antenna may be a directional antenna. The antenna may include a plurality of antenna elements. The RF circuit performs analog processing of a signal transmitted and received via the antenna. The RF circuit may include a high frequency filter, an amplifier, a modulator, a low pass filter, and the like.

The network communicator 214 transmits and receives signals from a network. The network communicator 214 receives a signal from an adjacent base station connected via an Xn interface which is an inter-base station interface, for example, and transmits the signal to the adjacent base station. Furthermore, the network communicator 214 receives a signal from the core network apparatus 300 connected via the NG interface, for example, and transmits the signal to the core network apparatus 300. The network communicator 214 may include a network interface. The network interface is, for example, a network adapter.

The controller 220 performs various types of control in the BS 200. The controller 220 controls, for example, communication with the UE 100 via the radio communicator 212. Furthermore, the controller 220 controls communication with a node (for example, a network node in a core network, an adjacent base station, or a core network apparatus 300.) via the network communicator 214, for example. An operation of the BS 200 to be described later may be an operation under the control of the controller 220.

The controller 220 may include one or more processors capable of executing a program, and a memory that stores the program. The one or more processors may execute the program to perform the operation of the controller 220. The program may be a program for causing the processor to execute the operation of the controller 220.

The processor performs digital processing of signals transmitted and received via the antenna and the RF circuit. The digital processing includes processing of a protocol stack of the RAN. The processor may be a single processor. The processor may include a plurality of processors. The plurality of processors may include a baseband processor that performs digital processing and one or more processors that perform other processing. The memory stores a program executed by the processor, a parameter related to the program, and data related to the program. The memory may include at least one of a ROM, an EPROM, an EEPROM, a RAM, and a flash memory. All or a part of the memory may be included in the processor.

A part or all of the controller 220 may be virtualized. That is, a part or all of the controller 220 may be implemented as a virtual machine. In this case, a part or all of the controller 220 may operate a physical machine (that is, hardware) including a processor, a memory, and the like and as a virtual machine on a hypervisor.

Note that, hereinafter, the operation of the functional units (the communicator 210 and the controller 220) included in the BS 200 may be described as the operation of the BS 200.

### (1.4) BWP (Bandwidth Part)

The UE 100 and the BS 200 perform communication using a BWP (bandwidth part) which is a subset of the total bandwidth of the cell. Specifically, the BS 200 configures one or more BWPs for the UE 100. The BS 200 can broadcast the UE 100 of the BWP (that is, the active BWP) used for communication with the BS 200 among the configured one or more BWPs. Specifically, the BS 200 can transmit, to the UE 100, an identifier indicating a BWP to be activated at the time of performing the configuration, that is, a BWP to be first used in communication with the BS 200. Furthermore, for control of switching from the active BWP to a BWP that is not the active BWP (hereinafter, inactive BWPs) and switching from the inactive BWP to the active BWP (so-called BWP switching), for example, a physical downlink control channel (for example, downlink assignment, uplink assignment), a timer (that is, bwp-InactivityTimer), RRC signaling, a MAC entity, or the like is used.

The BWP includes an initial BWP and a dedicated BWP. The initial BWP is used at least for initial access of the UE 100. The initial BWP is commonly used by a plurality of UEs 100. The initial BWP includes an initial BWP for downlink communication (hereinafter, initial downlink BWP (Initial Downlink BWP)) and an initial BWP for uplink communication (hereinafter, an initial uplink BWP (Initial Uplink BWP)). A value of the identifier (that is, bwp-id) indicating each of the initial downlink BWP and the initial uplink BWP is 0.

The UE 100 can determine the initial BWP (that is, the initial downlink BWP and the initial uplink BWP) by two methods, for example. In the first method, the UE 100 determines the initial BWP based on CORESET #0 configured using information included in a master information block (MIB) in a physical broadcast channel (PBCH). In the second method, the UE 100 determines the initial BWP based on a frequency domain location and bandwidth configured using information included in a system information block (SIB). For example, the UE 100 may apply the BWP determined by the first method to the communication with the BS 200 until the reception of a message 4 in the random access procedure. For example, after receiving the message 4, the UE 100 may apply the BWP determined by the second method to the communication with the BS 200.

The dedicated BWP is dedicatedly configured for the UE 100. The dedicated BWP includes a dedicated BWP for downlink communication (hereinafter, a dedicated downlink BWP (UE dedicated downlink BWP)) and a dedicated BWP for uplink communication (hereinafter, a dedicated uplink BWP (UE dedicated uplink BWP)). A value of the identifier indicating each of the dedicated downlink BWP and the dedicated uplink BWP is other than 0.

In the UE 100, for example, a dedicated BWP is configured on the basis of information (for example, information for the downlink BWP (that is, BWP-Downlink) and information for the uplink BWP (that is, BWP-Uplink).) included in the RRC message. Each of the information for the downlink BWP and the information for the dedicated uplink BWP may include, for example, at least one of information (for example, locationAndBadwidth) indicating a frequency domain location and bandwidth, information (for example, subcarrierSpacing) indicating a subcarrier spacing, and information (for example, cyclicPrefix) indicating whether an extended cyclic prefix is used.

### (1.5) Synchronization Signal and Physical Broadcast Channel Block (SSB)

The SSB includes four OFDM symbols in the time domain and 240 consecutive subcarriers in the frequency domain. The SSB includes a primary synchronization signal (hereinafter, a PSS), a secondary synchronization signal (hereinafter, an SSS), and a physical broadcast channel (PBCH). Each of the PSS and the SSS occupies one OFDM symbol and 127 subcarriers. The PBCH spans three OFDM symbols and 240 subcarriers. The location of the resource element to which the SSB is mapped is specified in the specification.

The BS 200 transmits the SSB in an initial BWP (specifically, an initial downlink BWP). The BS 200 can periodically transmit the SSB. The UE 100 can receive (that is, detects) the SSB transmitted from the BS 200 in the initial downlink BWP, and synchronize the time and/or the frequency.

### (1.6) Measurement

The UE 100 can perform measurement based on a radio signal received from the BS 200. For example, the UE 100 measures radio quality (for example, received power (so-called SS reference signal received power: SS-RSRP), received quality (so-called SS reference signal received quality: SS-RSRQ), a signal-to-interference-plus-noise ratio (so-called SS signal-to-noise and interference ratio: SS-SINR), and the like) based on the SSB. Furthermore, the UE 100 may measure the radio quality (for example, received power (so-called CSI reference signal received quality: CSI-RSRP), received quality (so-called CSI reference signal received quality: CSI-RSRQ), and the like) based on, for example, a channel state information reference signal (hereinafter, CSI-RS). The CSI-RS is transmitted by a resource (hereinafter, CSI-RS resource) dedicatedly configured in the UE 100. The CSI-RS resource can be configured to both the initial BWP and the dedicated BWP.

The UE 100 may use a measurement result for communication control with the BS 200. Furthermore, the UE 100 may report the measurement result to the BS 200. When performing the measurement based on the SSB, the UE 100 may report, for example, a measurement result for each SSB, a measurement result for each cell based on the SSB, and/or the SSB index. Furthermore, when performing the measurement based on the CSI-RS, the UE 100 may report, for example, a measurement result for each CSI-RS resource, a measurement result for each cell based on the CSI-RS resource, and/or a CSI-RS resource identifier. The UE 100 may report the measurement result periodically or by using a predetermined event as a trigger. The UE 100 may report the measurement result in a physical uplink shared channel (PUSCH) in the uplink BWP, for example.

Note that, when receiving request information of a measurement gap from the UE 100 regarding the measurement (SSB based intra-frequency measurement) based on the SSB at a frequency included in a frequency range of a cell, the BS 200 may configure the measurement gap according to the request information. In a case where the BS 200 has not received the request information from the UE 100 and none of the plurality of BWPs configured for the UE 100 includes the frequency domain resource of the SSB associated with the initial BWP other than the initial BWP, the BS 200 may always provide the configuration of the measurement gap to the UE 100.

### (1.7) Adjustment of uplink transmission timing

The BS 200 controls a transmission timing of an uplink signal of each UE 100 in order to keep a reception timing of the uplink signal from each UE 100 in the managed cell within a predetermined time range. The BS 200 determines a timing advance (hereinafter, TA) for the UE 100 to adjust the transmission timing of the uplink signal. The BS 200 provides the determined TA to each UE 100.

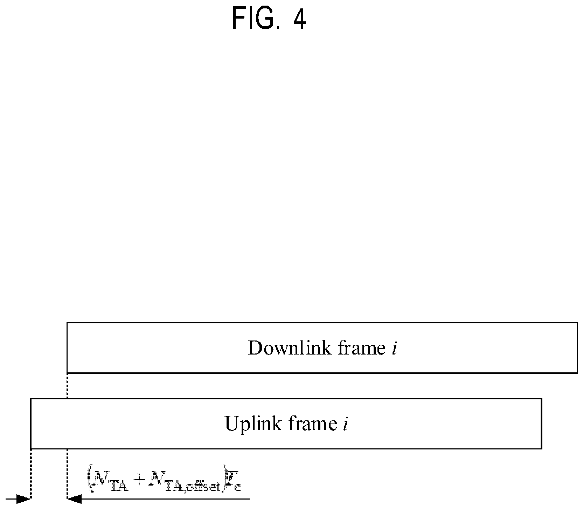

The UE 100 adjusts the uplink transmission timing by using a downlink frame timing as a reference. The UE 100 uses the TA to adjust an uplink frame timing relative to a downlink frame. Specifically, as illustrated in Fig. 4, the UE 100 shifts the i-th uplink frame forwards with respect to the i-th downlink frame by a time of T_{c} (N_{TA} + N_{TA, offset}). The N_{TA} is a timing advance between the downlink and the uplink. The N_{TA} is a value for adjusting the timing notified from the BS 200 (serving cell). N_{TA}, _{offset} is a fixed offset value used to calculate the timing advance. N_{TA, offset} is notified from the BS 200 (serving cell). When N_{TA, offset} is not notified from the BS 200, the UE 100 may determine N_{TA, offset} as a default value. T_{c} is a basic time unit. T_{c} is a predetermined fixed value. The UE 100 stores the information of T_{c} in advance.

The downlink frame timing serving as the reference for adjusting the uplink transmission timing is a timing of the head of the downlink frame. Specifically, the downlink frame timing is defined as a time when a first detected path (in time) of the downlink frame is received from the BS 200 (specifically, a reference cell). A radio frame forming the uplink frame and the downlink frame includes 10 subframes of 1 ms. Each frame is divided into two half-frames of the same size consisting of five subframes.

The UE 100 can grasp the downlink frame timing in the BWP that has received the SSB by synchronizing the downlink timings using a synchronization signal included in the SSB transmitted in the BWP.

### (2) System operation

### (2.1) Operation example 1

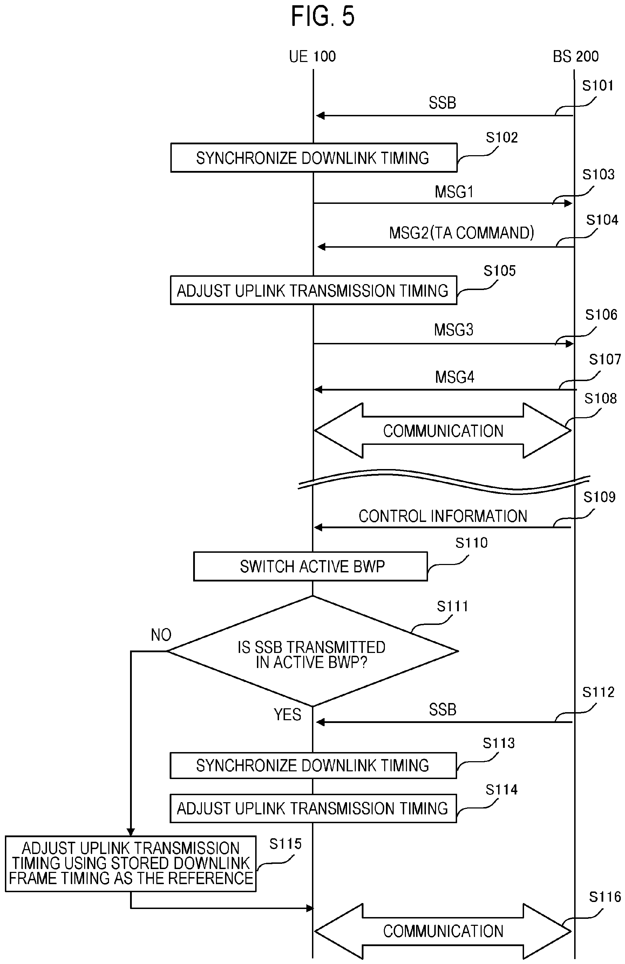

Operation example 1 of the UE 100 and the BS 200 according to the embodiment of the present disclosure will be described with reference to Fig. 5. The UE 100 is located in a serving cell managed by the BS 200. In operation example 1, a description will be given, as an example, as to a case in which the UE 100 is in the RRC idle state in which there is no RRC connection between the RRC of the UE 100 and the RRC of the base station 200.

In step S101, the BS 200 transmits the SSB in the serving cell. The BS 200 may periodically transmit the SSB in an initial BWP determined based on the SSB. The UE 100 receives the SSB from the BS 200.

In step S 102, the UE 100 performs downlink timing synchronization using a synchronization signal included in the SSB transmitted from the BS 200. Specifically, the UE 100 specifies the position of the SSS included in the synchronization signal by detecting the PSS included in the synchronization signal. The UE 100 can determine the downlink frame timing by detecting the SSS. The UE 100 can store the determined downlink frame timing. In this way, the UE 100 can grasp the downlink frame timing.

In step S103, the UE 100 transmits a message 1 (hereinafter, MSG 1) to the BS 200. For example, in a random access procedure, the UE 100 transmits the MSG 1 including random access preamble on a physical random access channel (PRACH). The UE 100 may determine the initial BWP based on the MIB included in the SSB. The UE 100 may transmit the MSG 1 using the determined initial BWP. The BS 200 receives the MSG 1 from the UE 100.

In step S104, the BS 200 transmits a message 2 (hereinafter, MSG 2) to the UE 100. The MSG2 is a random access response. The MSG 2 includes a TA command for adjusting the transmission timing of the uplink signal. The TA command is, for example, a value of N_{TA}. The BS 200 determines the TA command to the UE 100 according to a reception timing of the MSG 1. The UE 100 receives the MSG 2 from the BS 200.

In step S105, the UE 100 adjusts the uplink transmission timing using the downlink frame timing as a reference. Specifically, the UE 100 shifts the uplink frame timing used by the UE 100 forwards by a time T_{c} (N_{TA} + N_{TA, offset}) using the downlink frame timing as the reference.

In step S106, the UE 100 transmits a message 3 (hereinafter, MSG 3) to the BS 200. The UE 100 can transmit the MSG 3 at the adjusted uplink transmission timing in the initial BWP (specifically, the initial uplink BWP). The BS 200 receives the MSG 3 from the UE 100.

In step S107, the BS 200 transmits a message 4 (hereinafter, MSG 4) to the UE 100. The UE 100 receives the MSG 4 from the BS 200.

In step S108, the UE 100 and the BS 200 communicate with each other. For example, after receiving the MSG 4, the UE 100 may communicate with the BS 200 in the initial BWP determined based on a frequency domain location and bandwidth set using information included in a SIB 1. Therefore, the UE 100 can perform communication with the BS 200 using the initial BWP as an active BWP. For example, when the UE 100 performs communication with the BS 200 by using time division duplex (Time Division Duplex (TDD)), a center frequency of an active downlink BWP and a center frequency of an active uplink BWP may coincide with each other. When the UE 100 performs communication with the BS 200 by using frequency division duplex (Frequency Division Duplex FDD), the center frequency of the active downlink BWP and the center frequency of the active uplink BWP may coincide with each other or may be different from each other. A bandwidth of the active downlink BWP and a bandwidth of the active uplink BWP may coincide with each other or may be different from each other. It is noted that, when the active uplink BWP and the active downlink BWP have the same center frequency, the active uplink BWP and the active downlink BWP correspond to each other.

The BS 200 may notify the UE 100 of the TA command periodically or by an event trigger. The BS 200 may notify the UE 100 of configuration information (for example, ServingCellConfigCommon) including the N_{TA, offset} (for example, n-TimingAdvanceOffset) to be applied in the serving cell by an RRC message.

In addition, the BS 200 may transmit configuration information for configuring a dedicated BWP to the UE 100 using dedicated RRC signaling. The BS 200 may switch the active BWP to the dedicated BWP after configuring the dedicated BWP for the UE 100. The UE 100 may perform communication with the BS 200 using the dedicated BWP as the active BWP by applying a parameter included in the configuration information.

Note that, the configuration information may include, for example, at least one of information indicating a frequency domain location and bandwidth (for example, locationAndBadwidth), information indicating a subcarrier spacing (for example, subcarrierSpacing), information indicating whether an extended cyclic prefix is used (for example, cyclicPrefix), information indicating a parameter commonly applied to communication in the initial downlink BWP, and information indicating a parameter commonly applied to communication in the initial uplink BWP. In addition, the configuration information may include information for configuring a dedicated BWP (that is, the dedicated downlink BWP and/or the dedicated uplink BWP). The information for configuring the dedicated BWP may include at least one of information for identifying the BWP (for example, bwp-id), information indicating a parameter commonly applied to communication in the dedicated downlink BWP, information indicating a parameter dedicatedly applied to communication in the dedicated downlink BWP, information indicating a parameter commonly applied to communication in the dedicated uplink BWP, and information indicating a parameter dedicatedly applied to communication in the dedicated uplink BWP.

The configuration information may include configuration information for measuring the SSB. The configuration information may include, for example, information indicating a frequency in which the SSB is transmitted (for example, an absolute radio frequency channel number (ARFCN) or the like) as the information indicating a measurement object.

Note that, in a case where the frequency domain resource of the SSB associated with the initial BWP is not included in any of the plurality of BWPs dedicatedly configured for the UE 100 other than the initial BWP, the BS 200 may determine whether or not the UE 100 supports communication in the BWP in which the SSB is not transmitted. For example, the BS 200 can determine whether or not the UE 100 supports communication in the BWP in which the SSB is not transmitted on the basis of capability information received from the UE 100. For example, in a case where the capability information received from the UE 100 includes information indicating support of a BWP operation without bandwidth restriction (for example, bwp-WithoutRestriction), the BS 200 may determine that the UE 100 supports communication in the BWP in which the SSB is not transmitted. In this case, the BS 200 may configure the BWP in which the SSB is not transmitted to the UE 100. Note that the bandwidth restriction means, for example, that the SSB may not be transmitted in the bandwidth of the downlink BWP dedicatedly configured for the UE 100.

When determining that the UE 100 does not support communication in the BWP in which the SSB is not transmitted, the BS 200 may always provide the configuration of the measurement gap to the UE 100. On the other hand, when determining that the UE 100 supports communication in the BWP in which the SSB is not transmitted, the BS 200 may omit the configuration of the measurement gap for the UE 100.

In the UE 100, for example, when the BS 200 periodically transmits the SSB in the active BWP, the UE 100 may periodically synchronize a downlink timing in response to reception of the SSB. The UE 100 may update a downlink frame timing stored each time synchronization is performed.

In the following description, it is assumed that a plurality of BWPs are configured in the UE 100. The UE 100 performs communication with the BS 200 using one BWP among the plurality of BWPs as the active BWP.

In step S109, the BS 200 transmits control information to the UE 100. The UE 100 receives the control information. The control information is information for switching the active BWP. The BS 200 may transmit the information for switching the active BWP to the UE 100 using dedicated RRC signaling or may transmit the information using a PDCCH.

In step S110, the UE 100 switches the active BWP. The UE 100 switches the active BWP based on the control information. When performing communication with the BS 200 using the TDD, the UE 100 cause the center frequency of the active downlink BWP and the center frequency of the active uplink BWP to coincide with each other by switching of the BWP. In addition, when performing communication with the BS 200 using the FDD, the UE 100 may or may not cause the center frequency of the active downlink BWP and the center frequency of the active uplink BWP to coincide with each other by switching of the BWP.

In step S111, the UE 100 determines whether or not the SSB is transmitted in the active BWP. Specifically, the UE 100 determines whether the SSB is transmitted in a downlink BWP configured as the active BWP (hereinafter, active downlink BWP). That is, the UE 100 determines whether the active downlink BWP includes the SSB of the serving cell. When determining that the SSB is transmitted in the active downlink BWP (YES), the UE 100 executes the processing of step S113. On the other hand, when determining that the SSB is not transmitted in the active downlink BWP (NO), the UE 100 performs the processing of step S115. It is noted that step S111 may be performed before step S110.

For example, in a case where the active downlink BWP is the initial BWP, the UE 100 determines that the SSB is transmitted in the active downlink BWP. It is noted that the UE 100 can determine that the active downlink BWP is the initial BWP when an identifier of the configured active downlink BWP is 0. The UE 100 can determine that the active downlink BWP is not the initial BWP when the identifier of the configured active downlink BWP is not 0. Furthermore, for example, in a case where the frequency at which the SSB is transmitted is included in the active downlink BWP, the UE 100 may determine that the SSB is transmitted in the active downlink BWP based on the information indicating the frequency at which the SSB is transmitted. On the other hand, in a case where the frequency at which the SSB is transmitted is not included in the active downlink BWP, the UE 100 determines that the SSB is not transmitted in the active downlink BWP.

In step S112, the BS 200 transmits the SSB to the UE 100 in a predetermined downlink BWP. When a BWP in which the SSB is transmitted from the BS 200 (hereinafter, appropriately referred to as a BWP with SSB) is the active downlink BWP, the UE 100 receives the SSB. When a BWP in which the SSB is not transmitted from the BS 200 (hereinafter, appropriately referred to as a BWP without SSB) is the active downlink BWP, the UE 100 does not receive the SSB. The UE 100 that has received the SSB in the active downlink BWP performs the processing of step S113.

In step S113, the UE 100 performs downlink timing synchronization similarly to step S102. The UE 100 stores a downlink frame timing.

In step S114, the UE 100 adjusts uplink transmission timing similarly to step S105. Specifically, the UE 100 adjusts the uplink transmission timing using the downlink frame timing as the reference stored in step S113. Therefore, when the current active BWP is the BWP with SSB, the UE 100 adjusts the uplink transmission timing with reference to the downlink frame timing in the current active BWP without reference to the downlink frame timing stored in the past active BWP.

In step S115, the UE 100 adjusts the uplink transmission timing using the stored downlink frame timing as the reference. Specifically, the UE 100 adjusts the uplink transmission timing with reference to the downlink frame timing as the reference for adjusting the uplink transmission timing in step S108. Therefore, when the current active downlink BWP is the BWP without SSB, the UE 100 uses the downlink frame timing stored in the past active downlink BWP as the reference for adjusting the uplink transmission timing.

In step S116, the UE 100 and the BS 200 communicate with each other. The UE 100 performs uplink transmission at the adjusted uplink transmission timing. Specifically, when the SSB is transmitted in the active BWP, that is, when the active BWP is the BWP with SSB, the UE 100 performs the uplink transmission to the BS 200 at the uplink transmission timing adjusted by the processing of step S114. On the other hand, when the SSB is not transmitted in the active BWP, that is, when the active BWP is the BWP without SSB, the UE 100 performs the uplink transmission to the BS 200 at the uplink transmission timing adjusted by the processing of step S115.

As described above, the UE 100 (the communicator 110) performs communication using the active BWP used for communication with the BS 200 among the plurality of BWPs configured in the UE 100. The UE 100 (the controller 120) stores the downlink frame timing in the BWP with SSB when the active BWP is the BWP with SSB. When the active BWP is the BWP without SSB, the UE 100 (the controller 120) adjusts the uplink transmission timing in the active BWP with reference to the stored downlink frame timing. As a result, even if the BWP without SSB is the active BWP, the UE 100 can adjust the uplink transmission timing using the stored downlink frame timing as a reference, so that the uplink transmission timing can be appropriately adjusted.

In addition, when the active BWP is the BWP with SSB, the UE 100 (the controller 120) adjusts the uplink transmission timing in the active BWP with reference to the downlink frame timing in the active BWP without using the stored downlink frame timing as the reference. Accordingly, when the UE 100 can grasp the downlink frame timing in the current active BWP, the UE 100 can appropriately adjust the uplink transmission timing by using the downlink frame timing as the reference.

### (2.2) Operation example 2

Operation example 2 of the UE 100 and the BS 200 according to the embodiment of the present disclosure will be described. The differences from the above descriptions will be mainly described. In operation example 2, the UE 100 changes the downlink frame timing serving as a reference for adjusting the uplink transmission timing according to whether or not the active BWP is the initial BWP.

Steps S201 to S210 correspond to steps S101 to S110.

Note that, in step S208, when the active BWP is the initial BWP, the UE 100 stores the downlink frame timing in the initial BWP. Even if the SSB is transmitted in the active BWP, the UE 100 does not need to store the downlink frame timing in the active BWP when the active BWP is not the initial BWP. Therefore, the UE 100 may store only the latest downlink frame timing in the initial BWP. In addition, the UE 100 may update the downlink frame timing stored each time synchronization is performed in the initial BWP. The UE 100 may not update the stored downlink frame timing even if synchronization is performed in a BWP other than the initial BWP.

In step S211, the UE 100 determines whether or not the active BWP is the initial BWP. Specifically, the UE 100 can determine that the active BWP is the initial BWP when an identifier of the active BWP to be configured is 0. The UE 100 can determine that the active BWP is not the initial BWP when the identifier of the active BWP to be configured is not 0.

When determining that the active BWP is the initial BWP (YES), the UE 100 executes the processing of step S213. On the other hand, when determining that the active BWP is not the initial BWP (NO), the UE 100 executes the processing of step S215.

Steps S212 to S216 correspond to steps S112 to S116. In step S215, the UE 100 adjusts the uplink transmission timing with reference to the downlink frame timing as the reference for adjusting the uplink transmission timing in step S208. Therefore, when the current active downlink BWP is the initial BWP, the UE 100 uses the downlink frame timing stored in the past active downlink BWP as the reference for adjusting the uplink transmission timing.

In addition, in step S216, when the active BWP is the initial BWP, the UE 100 performs the uplink transmission to the BS 200 at the uplink transmission timing adjusted by the processing in step S214. On the other hand, when the active BWP is a BWP other than the initial BWP, the UE 100 performs the uplink transmission to the BS 200 at the uplink transmission timing adjusted by the processing of step S215. Therefore, the UE 100 adjusts the uplink transmission timing with reference to the downlink frame timing in the initial BWP regardless of whether the SSB is transmitted in the active downlink BWP. That is, whenever the active downlink BWP is a BWP other than the initial downlink BWP, the UE 100 the UE 100 uses the downlink frame timing in the initial downlink BWP including the SSB as the reference for adjusting the uplink transmission timing. Therefore, even in a case where the SSB is transmitted in the active downlink BWP, if the active downlink BWP is not the initial BWP, the UE 100 uses the downlink frame timing in the initial downlink BWP without using the downlink frame timing in the active downlink BWP as the reference.

As described above, when the active BWP is the initial BWP, the UE 100 (the controller 120) stores the downlink frame timing in the initial BWP. When the active BWP is a BWP other than the initial BWP, the UE 100 (the controller 120) adjusts the uplink transmission timing with reference to the stored downlink frame timing regardless of whether or not the SSB is transmitted in the active BWP. When performing the uplink transmission in the BWP other than the initial BWP, the UE 100 can adjust the uplink transmission timing by using the reference of the downlink frame timing of the initial BWP stored in the UE 100 without returning to the initial BWP. As a result, the load on the UE 100 can be reduced.

### (Other Embodiments)

Although the embodiments of the present disclosure have been described above, the present disclosure is not limited to the embodiments. The UE 100 may execute the above-described operation example 1 and/or operation example 2 in a case where the UE 100 is a RedCap UE having an ability to support a BWP operation without bandwidth restriction.

Each operation example described above is not limited to the case of being separately and independently performed, and each operation example can be appropriately combined and performed. Furthermore, for example, the steps in the processing described in the present specification do not necessarily need to be executed in time series in the order described in the flowchart or the sequence diagram. For example, the steps in the processing may be executed in an order different from the order described as the flowchart or the sequence diagram, or may be executed in parallel. Furthermore, some of the steps in the processing may be deleted, and further steps may be added to the processing. Moreover, each operation flow described above is not limited to be separately and independently implemented, and can be implemented by combining two or more operation flows. For example, some steps of one operation flow may be added to another operation flow, or some steps of one operation flow may be replaced with some steps of another operation flow.

For example, a method may be provided that includes operation of one or more components of the apparatus described herein, and a program may be provided to cause a computer to perform the operation of the components. Furthermore, a non-transitory tangible computer-readable storage medium on which the program is recorded may be provided. Such methods, programs, and a non-transitory tangible computer-readable storage medium (non-transitory tangible computer-readable storage medium) are also included in the present disclosure. Furthermore, at least a part of the UE 100 or at least a part of the BS 200 may be a chip set or a SoC (System on Chip) in which circuits that execute respective processing performed by the UE 100 or the BS 200 are integrated.

In the present disclosure, "transmit" may mean to perform processing of at least one layer in a protocol stack used for transmission, or may mean to physically transmit a signal wirelessly or by wire. Alternatively, "transmit" may mean a combination of performing the processing of at least one layer and physically transmitting a signal wirelessly or by wire. Similarly, "receive" may mean to perform processing of at least one layer in the protocol stack used for reception, or may mean to physically receive signals wirelessly or by wire. Alternatively, "receive" may mean a combination of performing the processing of at least one layer and physically receiving a signal wirelessly or by wire.

Although the present disclosure has been described in accordance with examples, it is understood that the present disclosure is not limited to the examples and structures. The present disclosure also includes various modifications and modifications within an equivalent range. In addition, various combinations and modes, and other combinations and modes including only one element, more elements, or less elements are also within the scope and idea of the present disclosure.

## Claims

1. A user equipment (100) configured to perform communication with a base station (200) in a BWP that is a subset of a total bandwidth of a cell of the base station (200), the user equipment comprising:
a communicator (110) configured to perform the communication using an active BWP to be used for the communication with the base station (200) among a plurality of the BWPs configured in the user equipment (100); and
a controller (120) configured to store a downlink frame timing in a BWP with an SSB when the active BWP is the BWP with the SSB, which is the BWP in which the SSB is transmitted from the base station (200), wherein
the controller (120) is configured to adjust an uplink transmission timing in the active BWP with reference to the stored downlink frame timing when the active BWP is a BWP without the SSB, which is the BWP in which the SSB is not transmitted from the base station (200).

2. The user equipment according to claim 1, wherein
the controller (120) is configured to adjust, when the active BWP is the BWP with the SSB, the uplink transmission timing with reference to the downlink frame timing in the active BWP without reference to the stored downlink frame timing.

3. The user equipment according to claim 1 or 2, wherein the controller (120) is configured to
store, when the active BWP is at least an initial BWP used for initial access of the plurality of pieces of user equipment (100) in the cell, the downlink frame timing in the initial BWP, and
adjust, when the active BWP is the BWP other than the initial BWP, the uplink transmission timing with reference to the stored downlink frame timing regardless of whether the SSB is transmitted in the active BWP.

4. A communication control method executed by user equipment (100) configured to perform communication with a base station (200) in a BWP that is a subset of a total bandwidth of a cell of the base station (200), the communication control method comprising the steps of:
performing the communication using an active BWP to be used for the communication with the base station (200) among a plurality of the BWPs configured in the user equipment (100);
storing a downlink frame timing in a BWP with an SSB when the active BWP is the BWP with the SSB, which is the BWP in which the SSB is transmitted from the base station (200); and
adjusting an uplink transmission timing in the active BWP with reference to the stored downlink frame timing when the active BWP is a BWP without the SSB, which is the BWP in which the SSB is not transmitted from the base station (200).
